# FASCICULE DE BREVET EUROPEEN

(11) **EP 3 041 645 B1**
(45) Date de publication et mention de la délivrance du brevet: **17.05.2017**
(21) Numéro de dépôt: 14758364.5
(22) Date de dépôt: 29.08.2014
(51) Int. Cl.: B25J 9/00

(54) **MEMBRE INFERIEUR D'UN EXOSQUELETTE OU D'UN ROBOT BIPEDE**
UNTERE GLIEDMASSE FÜR EIN EXOSKELETT ODER EINEN ZWEIBEINIGEN ROBOTER
LOWER LIMB OF AN EXOSKELETON OR A BIPEDAL ROBOT

(30) Priorité: 06.09.2013 FR 1358603
(43) Date de publication de la demande: 13.07.2016
(73) Titulaire: Commissariat à l'Énergie Atomique et aux Énergies Alternatives, 75015 Paris (FR)
(72) Inventeur: GARREC, Philippe, 91190 Gif-sur-Yvette (FR)
(74) Mandataire: Parzy, Benjamin Alain
(86) Numéro de dépôt international: PCT/EP2014/068356
(87) Numéro de publication internationale: WO 2015/032696

(56) Documents cités:
- EP-A1- 1 932 499
- EP-A1- 2 193 774
- WO-A1-2012/044621
- WO-A2-2009/082249

## Description

L'invention est relative à un membre inférieur d'un exosquelette ou d'un robot bipède. De tels membres présentent en général un segment de cuisse auquel est articulé un segment de jambe, un pied étant articulé à l'extrémité du segment de jambe. Le contrôle complet du membre inférieur nécessite un premier actionneur pour commander l'articulation de hanche entre la cuisse et un bassin, un deuxième actionneur pour contrôler l'articulation de genou entre la cuisse et la jambe, et un troisième actionneur pour contrôler l'articulation de cheville entre la jambe et le pied.

Ce dernier actionneur est en général porté par la jambe, ce qui représente une masse importante avec un fort déport, induisant une augmentation importante de l'inertie du membre inférieur. Document WO 2009/082249 divulgue un membre inférieur d'exosquelette selon le préambule de la revendication 1.

### OBJET DE L'INVENTION

Un objet de l'invention est de proposer un membre inférieur d'exosquelette ou de robot bipède dont l'articulation de cheville peut être contrôlée sans les inconvénients précités.

### PRESENTATION DE L'INVENTION

A cet effet, on propose un membre inférieur d'exosquelette ou de robot bipède, comprenant un segment de cuisse, un segment de jambe, et un pied, dans lequel, selon l'invention, le segment de jambe comprend deux bielles ayant des extrémités proximales articulées selon des axes de flexion parallèles sur le segment de cuisse, les deux bielles ayant des extrémités distales articulées selon des axes de flexion parallèles sur le pied.

Ainsi, le pied peut être contrôlé en exerçant un effort sur l'une des bielles du segment de jambe, ce qui peut être fait au moyen d'un actionneur disposé directement sur le segment de cuisse. De la sorte, l'inertie de la jambe est préservée, et l'inertie du membre inférieur s'en trouve diminuée d'autant.

Selon un mode de réalisation particulier, la première bielle est articulée directement sur un fémur du segment de cuisse, tandis que la deuxième bielle est articulée à l'extrémité d'une manivelle elle-même articulée sur le fémur du segment de cuisse. Ainsi, l'application de l'effort dans la bielle articulée sur la manivelle peut se faire au moyen d'un actionneur contrôlant la position angulaire de la manivelle sur le fémur. De préférence, la manivelle est articulée sur le fémur selon le même axe d'articulation que la première bielle.

### PRESENTATION DES FIGURES

L'invention sera mieux comprise à la lumière de la description qui suit d'un mode particulier de réalisation non limitatif de l'invention, en référence aux figures des dessins annexés parmi lesquelles :
- La figure 1 est un schéma de principe d'un membre inférieur selon un premier mode particulier de réalisation de l'invention ;
- La figure 2 est un schéma de principe d'un membre inférieur selon un deuxième mode particulier de réalisation de l'invention ;
- La figure 3 est un schéma de principe d'un membre inférieur selon une variante de réalisation de l'invention ;
- La figure 4 est un schéma de principe d'un membre inférieur selon une variante de réalisation de l'invention ;
- La figure 5 est une vue de face du membre inférieur de la figure 4 ;
- La figure 6 est un schéma de principe d'un membre inférieur selon un troisième mode particulier de réalisation de l'invention ;
- La figure 7 est un schéma de principe d'un membre inférieur selon une variante de l'invention ;
- La figure 8 est vue de face du membre inférieur des figures 6 et 7.

### DESCRIPTION DETAILLEE DE MODES DE REALISATION DE L'INVENTION

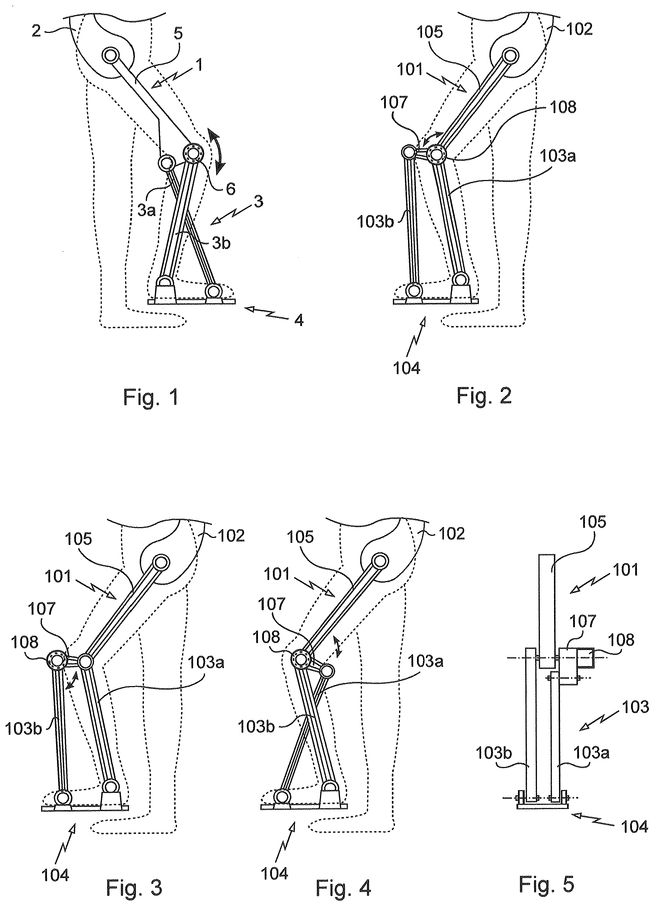

En référence à la figure 1, et conformément à un premier mode particulier de réalisation, le segment inférieur de l'invention comporte successivement un segment de cuisse 1 comprenant un fémur 5 ayant une extrémité proximale articulée à un bassin 2, un segment de jambe 3 relié au segment de cuisse 1 et un pied 4 relié au segment de jambe 3. Conformément à l'invention, le segment de jambe 3 comporte deux bielles 3a, 3b ayant des extrémités proximales respectives articulées sur l'extrémité distale du fémur 5 selon des axes de flexion parallèles, et des extrémités distales respectives articulées sur le pied 4 selon des axes de flexion parallèles, de sorte à former un quadrilatère déformable. Un actionneur 6 (ici un actionneur rotatif) est ici disposé au niveau de l'articulation de la bielle 3b pour contrôler la position angulaire de ladite bielle vis-à-vis du fémur 5 et ainsi transmettre un moment de flexion.

Dans ce mode de réalisation, l'attitude du pied est directement déterminée par la position angulaire de la bielle 3b commandée par l'actionneur 6.

Un deuxième mode particulier de réalisation de l'invention est illustré aux figures 2 à 4 qui présentent des variantes de réalisation similaires et sur lesquelles les références des éléments communs avec la figure 1 sont augmentées d'une centaine. Sur la figure 2, l'une des bielles, en l'occurrence la bielle 103b, est articulée non pas directement sur le fémur 105, mais à l'extrémité d'une manivelle 107 montée à pivotement sur le fémur 105, et dont la position angulaire vis-à-vis du fémur 105 est contrôlée par un actionneur 108. Ici, l'axe de pivotement de la manivelle 107 coïncide avec l'axe d'articulation de l'autre bielle 103a. L'actionneur 108 permet de contrôler la position angulaire du pied 104, indépendamment de la position du segment de jambe 105 vis-à-vis du segment de cuisse 101. Cette disposition permet par exemple un appui sur la pointe du pied.

Sur la figure 3, la manivelle 107 a été inversée. L'actionneur 108 contrôle maintenant l'articulation entre la manivelle 107 et la bielle 103b.

Sur ces deux variantes, la manivelle s'étend vers l'avant et constitue alors une sorte de protection du genou de l'opérateur, au cas où le membre inférieur est destiné à équiper un exosquelette.

Sur les figures 4 et 5, les bielles 103a et 103b sont maintenant croisées, la manivelle 107 s'étendant vers l'arrière du genou.

Ces trois variantes de réalisation permettent de contrôler l'attitude du pied avec un actionneur se trouvant à proximité du genou.

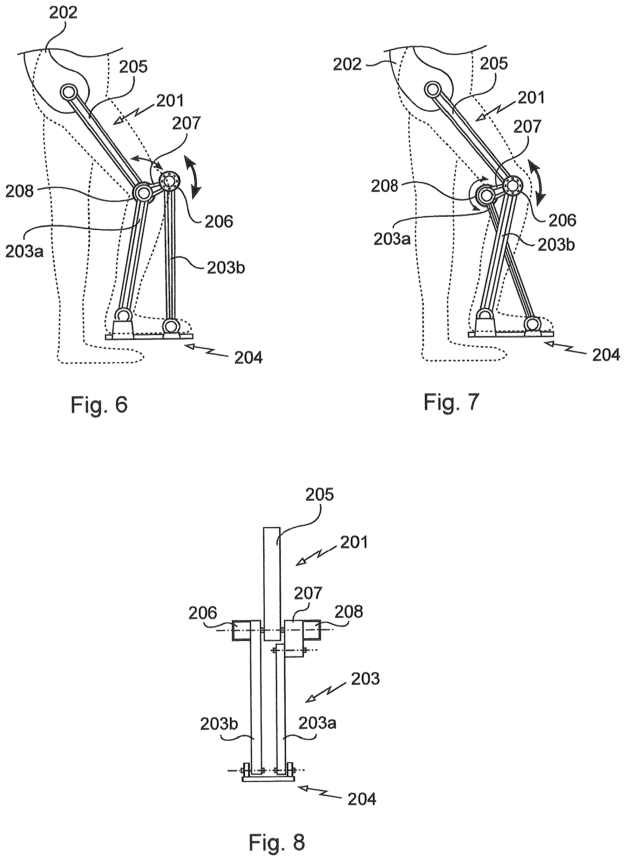

Selon un troisième mode particulier de réalisation illustré aux figures 6 et 7 sur lesquelles les références des éléments communs sont encore augmentées d'une centaine, on utilise de nouveau une manivelle 207 pour relier l'une des bielles 203a au 203b au fémur 205. Cette fois, le segment inférieur comporte à la fois un actionneur 206 contrôlant la position angulaire de la bielle 203b par rapport au fémur 205, et un actionneur 208 contrôlant la position angulaire de la manivelle 207 par rapport au fémur 205.

L'utilisation de deux actionneurs permet à la fois de transmettre un moment de flexion entre le segment de cuisse et le segment de jambe et de contrôler l'attitude du pied.

Bien entendu, l'axe d'articulation de la manivelle sur le fémur peut ne pas coïncider avec celui de la bielle qui est directement articulée sur le fémur.

Le pied est avantageusement muni de capteurs adaptés à détecter le contact avec le sol.

Dans les exemples illustrés, le ou les actionneurs contrôlant la partie basse du membre inférieur sont ainsi rejetés sur le segment de cuisse, diminuant l'inertie totale du membre inférieur.

L'invention n'est pas limitée à ce qui vient d'être décrit, mais englobe toute variante entrant dans le cadre défini par les revendications. En particulier Bien que les actionneurs illustrés soient ici des actionneurs rotatifs, on pourra utiliser tout type d'actionneur, comme des actionneurs linéaires, des vérins à câbles, qu'ils soient électriques, hydrauliques... Qui plus est, bien qu'ici, les actionneurs soient disposés directement au niveau des articulations, ils pourront bien sûr être déportés et remontés par exemple au niveau du bassin.

Bien que les bielles illustrées soient de longueur déterminée, elles pourront être de longueur variable, par exemple des bielles télescopiques. Enfin, les articulations seront de préférence du type à pivot, mais pourront également comporter d'autres degrés de libertés. En particulier, elles pourront être rotulées.

## Revendications

1. Membre inférieur d'exosquelette ou de robot bipède, comprenant un segment de cuisse (1;101;201), un segment de jambe (3;103;203), et un pied (4;104;204), **caractérisé en ce que** le segment de jambe comprend deux bielles (3a,3b,103a,103b;203a,203b) ayant des extrémités proximales qui sont articulées selon des axes parallèles sur le segment de cuisse, les deux bielles ayant des extrémités distales articulées selon des axes parallèles sur le pied.

2. Membre inférieur selon la revendication 1, dans lequel le segment de cuisse comporte un fémur (5), les deux bielles du segment de jambe étant articulées directement sur le fémur, un actionneur (6) étant disposé pour contrôler une position angulaire de l'une des bielles par rapport au fémur.

3. Membre inférieur selon la revendication 1, dans lequel le segment de cuisse comporte un fémur (105;205), l'une des bielles (103b;203b) étant directement articulée sur le fémur, tandis que l'autre des bielles (103a;203a) est articulée à l'extrémité d'une manivelle (107) montée à rotation sur le fémur.

4. Membre inférieur selon la revendication 3, dans lequel la manivelle est articulée sur le fémur selon le même axe d'articulation que celle des bielles directement articulée sur le fémur.

5. Membre inférieur selon la revendication 3, dans lequel un actionneur (108;208) est disposé sur le segment de cuisse pour contrôler une position angulaire de la manivelle par rapport au fémur.

6. Membre inférieur selon la revendication 3, dans lequel un actionneur (206) supplémentaire est disposé sur le segment de cuisse pour contrôler une position angulaire de la première bielle par rapport au fémur.

## Patentansprüche

1. Untere Gliedmaße eines Exoskeletts oder zweibeinigen Roboters, umfassend einen Oberschenkelabschnitt (1; 101; 201), einen Unterschenkelabschnitt (3; 103; 203) und einen Fuß (4; 104; 204), **dadurch gekennzeichnet, dass** der Unterschenkelabschnitt zwei Verbindungsstangen (3a, 3b, 103a, 103b; 203a, 203b) umfasst, die proximale Enden haben, die an parallelen Achsen an dem Oberschenkelabschnitt angelenkt sind, wobei die beiden Verbindungsstangen distale Enden haben, die an parallelen Achsen an dem Fuß angelenkt sind.

2. Untere Gliedmaße nach Anspruch 1, bei der der Oberschenkelabschnitt einen Oberschenkelknochen (5) umfasst, wobei die beiden Verbindungsstangen des Unterschenkelabschnittes direkt an dem Oberschenkelknochen angelenkt sind, wobei ein Aktor (6) angeordnet ist, um eine Winkelposition einer der Verbindungsstangen in Bezug auf den Oberschenkelknochen zu steuern.

3. Untere Gliedmaße nach Anspruch 1, bei der der Oberschenkelabschnitt einen Oberschenkelknochen (105; 205) umfasst, wobei eine der Verbindungsstangen (103b; 203b) direkt an dem Oberschenkelknochen angelenkt ist, während die andere der Verbindungstangen (103a; 203a) an dem Ende einer Kurbel (107) angelenkt ist, die drehbar an dem Oberschenkelknochen gelagert ist.

4. Untere Gliedmaße nach Anspruch 3, bei der die Kurbel an dem Oberschenkelknochen gemäß der gleichen Gelenkverbindungsachse angelenkt ist, wie die der Verbindungsstangen, die direkt an dem Oberschenkelknochen angelenkt ist.

5. Untere Gliedmaße nach Anspruch 3, bei der ein Aktor (108; 208) an dem Oberschenkelabschnitt angeordnet ist, um eine Winkelposition der Kurbel in Bezug auf den Oberschenkelknochen zu steuern.

6. Untere Gliedmaße nach Anspruch 3, bei der ein zusätzlicher Aktor (206) an dem Oberschenkelabschnitt angeordnet ist, um eine Winkelposition der ersten Verbindungsstange in Bezug auf den Oberschenkelknochen zu steuern.

## Claims

1. A lower limb of an exoskeleton or bipedal robot, comprising a thigh segment (1; 101; 201), a leg segment (3; 103; 203) and a foot (4; 104; 204), **characterized in that** the leg segment comprises two connecting rods (3a, 3b, 103a, 103b; 203a, 203b) having proximal ends that are articulated along parallel axes on the thigh segment, the two connecting rods having distal ends articulated along parallel axes on the foot.

2. The lower limb as claimed in claim 1, in which the thigh segment comprises a femur (5), the two connecting rods of the leg segment being articulated directly on the femur, an actuator (6) being arranged to control an angular position of one of the connecting rods with respect to the femur.

3. The lower limb as claimed in claim 1, in which the thigh segment comprises a femur (105; 205), one of the connecting rods (103b; 203b) being articulated directly on the femur, while the other of the connecting rods (103a; 203a) is articulated on the end of a crank (107) mounted rotatably on the femur.

4. The lower limb as claimed in claim 3, in which the crank is articulated on the femur along the same axis of articulation as the one of the connecting rods that is articulated directly on the femur.

5. The lower limb as claimed in claim 3, in which an actuator (108; 208) is arranged on the thigh segment in order to control an angular position of the crank with respect to the femur.

6. The lower limb as claimed in claim 3, in which a supplementary actuator (206) is arranged on the thigh segment in order to control an angular position of the first connecting rod with respect to the femur.
